Europäisches Patentamt

European Patent Office

Office européen des brevets

(11) Numéro de publication: **0 223 892**
**B1**

**FASCICULE DE BREVET EUROPEEN**

(45) Date de publication du fascicule du brevet:
25.04.90

(51) Int. Cl.⁴: **B60R 25/06,** B60R 25/08

(21) Numéro de dépôt: 85420209.0

(22) Date de dépôt: 21.11.85

(54) Dispositif anti-vol pour véhicule automobile.

(43) Date de publication de la demande:
03.06.87 Bulletin 87/23

(45) Mention de la délivrance du brevet:
25.04.90 Bulletin 90/17

(84) Etats contractants désignés:
AT BE CH DE GB IT LI LU NL SE

(56) Documents cités:
FR-A- 925 217
FR-A- 2 465 617
FR-A- 2 492 749
GB-A- 865 204
GB-A- 2 021 499
GB-A- 2 024 128
GB-A- 2 024 307
GB-A- 2 142 889
US-A- 1 329 644
US-A- 3 777 518
US-A- 3 822 573

(73) Titulaire: Bernacchi, Armand, 38, avenue des Vallées,
F-74200 Thonon-les Bains(FR)

(72) Inventeur: Bernacchi, Armand, 38, avenue des Vallées,
F-74200 Thonon-les Bains(FR)

(74) Mandataire: Moinas, Michel, Cabinet Michel
Moinas 13 Chemin du Levant,
F-01210 Ferney-Voltaire(FR)

ACTORUM AG

## Description

La présente invention se rapporte à un dispositif anti-vol pour véhicule automobile, dont la particularité est d'empêcher le déplacement du véhicule quand un malfaiteur a réussi à y pénétrer.

On connaît des dispositifs anti-vol qui bloquent les serrures des portières; on connaît d'autres dispositifs qui bloquent le volant et ces types de dispositifs sont couramment montés en série sur les véhicules automobiles. On est allé jusqu'à prévoir en outre des systèmes plus ou moins comliqués et pratiques à utiliser, dans lesquels le volant peut-être démonté et emporté par le propriétaire du véhicule ou dans lequel les roues sont bloquées par des sortes de sabots de frein ou éléments analogues.

Ces dispositifs, soit qu'ils soient bien connus des voleurs, soit qu'ils soient mal commodes à l'usage, n'offrent donc pas des garanties suffisantes.

L'exposé GB-A 2 142 889 décrit un dispositif antivol qui condamne le levier de frein à main lorsque celui-ci est en position serrée, en se verouillant sur le levier de changement de vitesses. Ce dispositiv, bien que particulièrement simple et économique, n'est certainement pas très dissuasif, ni efficace, car ses éléments constitutifs sont librement accessibles et peuvent être facilement sciés, tordus ou brisés.

Selon l'invention au contraire, le dispositif comprend des moyens de condamnation du levier de frein à mains lorsque celui-ci est en position serrée et ces moyens se verrouillent sur le levier de changement de vitesss en en empêchant le maniement. Les moyens de condamnation comprennent un carter faisant cache et enveloppant le levier de frein à main, le carter étant monté pivotant sur un collier de serrage solidaire du levier de frein à main.

Avantageusement, l'axe de pivotement du carter passant par le collier de serrage est en position haute par rapport au levier de frein à main.

Selon un mode de réalisation, les moyens de condamnation se verrouillent sur le levier de changement de vitesses par l'intermédiaire d'une pièce annulaire en deux parties, commandée par une serrure. Avantageusement, la pièce annulaire comprend une partie fixe et une partie mobile déplaçable longitudinalement pour dégager le levier de changement de vitesses quand la serrure est en position ouverte.

De préférence, les parties fixe et mobile de la pièce annulaire comprennent, à leur interface de contact, un ensemble faisant tenon/mortaise pour éviter que cette pièce annulaire ne puisse être ouverte en la forçant hors de son plan.

La serrure peut comprendre un téton qui prend appui sur et déplace un organe mobile de renvoi permettant de dégager la partie mobile de la pièce annulaire et un ressort de rappel qui repousse l'organe de renvoi dans une position où il bloque la partie mobile de la pièce annulaire contre la partie fixe lorsque la serrure est actionnée de façon à libérer l'appui du téton sur l'organe de renvoi.

Enfin, on peut associer à la serrure une alarme qui peut être déconnectée par un contact, lui-même muni d'une serrure, par exemple sous le tableau de bord.

L'invention sera mieux comprise en référence au dessin annexé, doné à titre d'exemple. Dans ce dessin:

- la figure 1 est une vue en coupe du dispositif dans sa position de verrouillage,
- la figure 2 est une vue de côté du même dispositif, le cache ayant été déverrouillé et basculé vers l'arrière,
- la figure 3 est une vue également de côté, correspondant à la figure 2, où le frein à main a été déserré,
- la figure 4 est une vue de dessus du dispositif,
- la figure 5 est une vue en coupe de la serrure, celle-ci étant en position de verrouillage,
- la figure 6 correspond à la figure 5, la serrure ayant été mise en position de déverrouillage, et
- la figure 7 est une vue correspondante à la figure 6 où la pièce annulaire bloquant le levier de changement de vitesses a été ouverte.

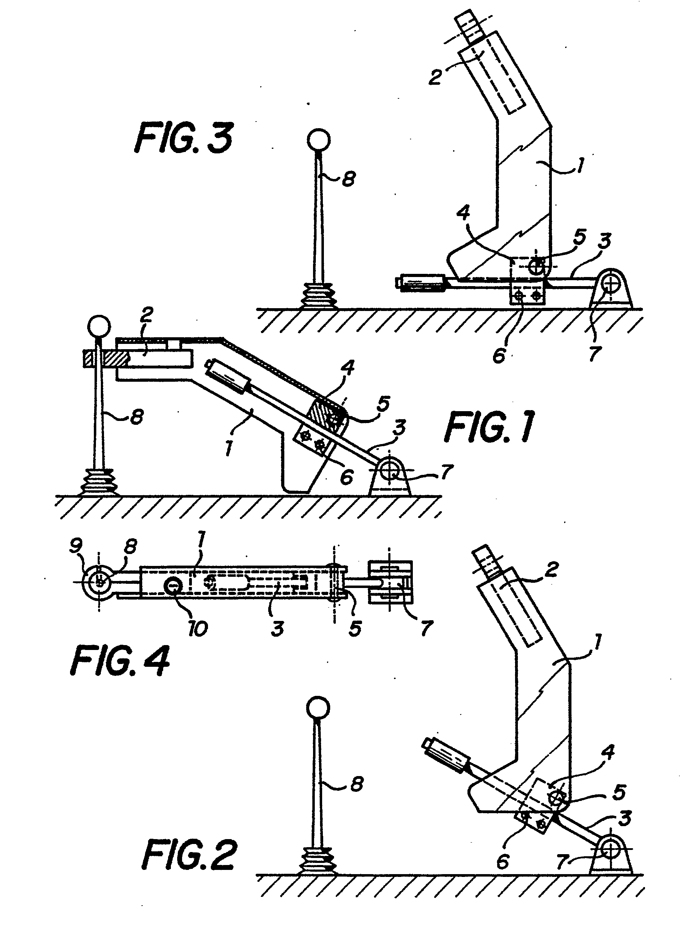

Comme en le voit sur les figures 1 à 4, le dispositif anti-vol comprend un carter 1 faisant cache, muni d'un verrou 2, et se fixant sur le levier 3 de frein à main. La fixation est réalisée par l'intermédiaire d'un collier de serrage 4, le carter 1 étant fixé par rivetage en position haute, ce rivetage faisant axe 5 de pivotement pour le carter 1. Le collier de serrage 4 est par ailleurs fixé sur le levier 3 de frein à main par des vis 6.

Le levier 3 de frein à main pivote autour de l'axe 7 et entraîne en pivotement le carter 1.

Le carter 1, par l'intermédiaire du verrou 2, vient se prendre autour du levier 8 de changement de vitesses par une pièce annulaire 9 commandée par une serrure 10.

Comme on le comprendra aisément de la figure 4, le carter 1 faisant cache enveloppe complètement le levier 3 de changement de vitesses,tant sur les côtés qu'au dessus. Ce carter peut être par exemple une poutrelle en tôle, d'épaisseur suffisante, 3 millimètres et plus.

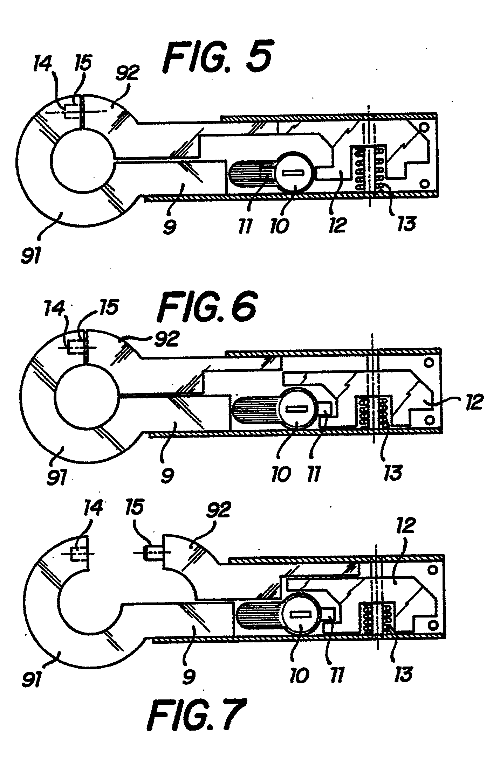

Comme on le voit sur les figures 5 à 7, le verrou 2 est constitué d'une pièce annulaire 9 en deux parties (91,92), commandée par la serrure 10. Cette serrure 10 actionne, par rotation de 180°C par exemple et par l'intermédiaire d'un téton 11, un organe de renvoi 12 qui va à l'encontre d'une force mécanique exercée par un ressort 13.

On notera également que les parties fixe 91 et mobile 92 sont munies respectivement d'une mortaise 14 en correspondance avec un téton 15, de façon à empêcher toute déformation hors du plan.

Le dispositif selon l'invention s'utilise comme suit:

Lorsque le conducteur monte dans son véhicule automobile, le dispositif anti-vol est dans la position illustrée à la figure 1 et le verrou de la serrure dans la position illustrée à la figure 5. Il introduit alors la clé dans la serrure 10 et tourne celle-ci de 180°C, ce qui amène le téton 11 dans la position de la figure 6 en abaissant l'organe de renvoi 12 à l'encontre du ressort. Il lui suffit alors de déplacer la partie mobile 92 de la pièce annulaire 9 vers l'arrière pour libérer le levier de changement de vitesse.

Il peut alors relever le cache 1 par pivotement autour de l'axe 5 et on se retrouve dans la position illustrée à la figure 2. Il lui reste alors à desserrer le frein à main pour se retrouver dans la position illustrée à la figure 3 où le véhicule automobile peut démarrer librement.

A la sortie de son véhicule, le conducteur procède à l'inverse de ce qui a été décrit ci-dessus, de façon à verrouiller le dispositif anti-vol, selon figures 1 et 5.

Le dispositif anti-vol peut être verrouillé autour du levier 8 de changement de vitesses lorsque celui-ci est enclenché en marche arrière ; le véhicule ne pourra que faire des soubresauts vers l'arrière si par hasard le contact du moteur était établi et que la force du frein à main ne soit pas suffisante. On peut également procéder au verrouillage sur la première, ce qui ne donnera au mieux que des soubresauts vers l'avant.

Si on procède au verrouillage autour d'une position correspondant à un rapport élevé, par exemple la quatrième ou la cinquième, il est sûr alors que le véhicule ne pourra démarrer car, au moment de l'embrayage, le moteur ne manquera pas de caler. Le verrou est bien entendu un verrou de sûreté et la serrure peut avoir une double entrée, de façon à permettre au conducteur de débloquer le système anti-vol si l'entrée principale de la serrure a été forcée.

On peut prévoir enfin un système d'alarme branché sur n'importe quel organe de l'anti-vol, par exemple sur la serrure, alarme qui doit être déconnectée par le conducteur avant déverrouillage de l'anti-vol. Un contact au tableau de bord, de préférence caché, peut permettre la déconnection de l'alarme, comme cela est bien connu. On peut également utiliser une autre serrure.

Comme on l'aura compris, ce dispositif anti-vol peut être utilisé sur tous les véhicules automobiles possèdant à proximité le levier de changement de vitesses et le levier de frein à main, notamment les véhicules où ces deux commandes sont situées au plancher. Il s'adapte aussi bien aux véhicules à boîte de vitesses conventionnelle, aux véhicules à boîte de vitesses automatique.

Le dispositif anti-vol s'installe aisément sur le véhicule automobile, en prenant place par exemple entre les deux organes de verrouillage des ceintures de sécurité du conducteur et du passsager avant. Tant par sa structure que par sa facilité de pose, il revient paticulièrement bon marché.

On remarquera en outre que ce dispositif ne peut être aisément forcé; par exemple, toute manoeuvre tendant à le scier ne donnerait que des résultats décevants. En effet, tant l'axe du levier de frein que l'appui sur le levier de changement de vitesses et bien que celui-ci soit en pris, ne saurait donner une rigidité suffisante pour faire étau.

La fabrication et les dimensions des carters seront évidemment calculées selon les différents types de véhicules en fonction de l'aisance et de l'espace disponibles.

## Revendications

1. Dispositif anti-vol pour véhicule automobile, comprenant des moyens de condamnation du levier (3) de frein à main lorsque celui-ci est en position serrée, ces moyens se verrouillant sur le levier (8) de changement de vitesse en empêchant le maniement, caractérisé en ce que les moyens de condamnation comprennent un carter (1) faisant cache et enveloppant le levier (3) de frein à main, le carter (1) étant monté pivotant sur un collier de serrage (4) solidaire du levier (3) de frein à main.

2. Dispositif selon la revendication 1, caractérisé en ce que l'axe (5) de pivotement du carter (1) passant par le collier de serrage (4) est en position haute par rapport au levier (3) de frein à main.

3. Dispositif selon la revendication 1, caractérisé en ce que le carter (1) se verrouille sur le levier (8) de changement de vitesses par l'intermédiaire d'une pièce annulaire (9) en deux parties (91, 92) commandée par une serrure (10).

4. Dispositif selon la revendication 3, caractérisé en ce que la pièce annulaire (9) comprend une partie fixe (91) et une partie mobile (92) déplaçable longitudinalement pour dégager le levier (8) de changement de vitesses quand la serrure (10) est en position ouverte.

5. Dispositif selon la revendication 4, caractérisé en ce que les parties fixe (91) et mobile (92) de la pièce annulaire (9) comprennent, à leur interface de contact, un ensemble faisant tenon (15)/mortaise (14) pour éviter que cette pièce annulaire (9) ne puisse être ouverte en la forçant hors de son plan.

6. Dispositif selon la revendication 4, caractérisé en ce que la serrure (10) comprend un téton (11) qui prend appui sur et déplace un organe mobile (12) de renvoi permettant de dégager la partie mobile (92) de la pièce annulaire (9), un ressort de rappel (13) repoussant l'organe de renvoi (12) dans une position où il bloque la partie mobile (92) de la pièce annulaire (9) contre la partie fixe (91) lorsque la serrure (10) est actionnée de façon à libérer l'appui du téton (11) sur l'organe de renvoi (12).

7. Dispositif selon la revendication 3, caractérisé en ce qu'à la serrure (10) est associée une alarme.

## Patentansprüche

1. Diebstahlsicherung für Fahrzeuge, bestehend aus einer Einrichtung zur Verriegelung des Handbremshebels (3) bei angezogener Handbremse mit dem Gangschalthebel (8), so daß beide nicht betätigt werden können. Die Erfindung ist dadurch gekennzeichnet, daß das Verriegelungssystem aus einem Gehäuse (1) als Abdeckung für den Handbremshebel (3) besteht, wobei das Gehäuse drehbar an einer Klemmbefestigung (4) montiert ist, die an den Handbremshebel (3) angeschraubt ist.

2. Vorrichtung nach Anspruch 1, dadurch gekennzeichnet, daß die Drehachse (5) des Gehäuses (1), die durch die Klemmbefestigung (4) läuft, sich oberhalb des Handbremshebels (3) befindet.

3. Vorrichtung nach Anspruch 1, dadurch gekennzeichnet, daß das Gehäuse (1) mit Hilfe eines Ringstückes (9) bzw. dessen beiden Teilen (91) und (92) mit dem Gangschalthebel (9) über ein Schloß (10) verriegelt wird.

4. Vorrichtung nach Anspruch 3, dadurch gekennzeichnet, daß das Ringstück 9 aus einem festen Teil (91) und einem beweglichen Teil (92) besteht, das in Längsrichtung verschoben werden kann und somit den Gangschalthebel freigibt, wenn das Schloß (10) geöffnet wird.

5. Vorrichtung nach Anspruch 4, dadurch gekennzeichnet, daß der feste (91) und der bewegliche Teil (92) des Ringstücks (9) an ihren Berührungsflächen mit einem Zapfen (15) und einer Nut (14) ausgestattet sind, damit das Ringstück (9) nicht gewaltsam aufgebogen werden kann.

6. Vorrichtung nach Anspruch 4, dadurch gekennzeichnet, daß das Schloß (10) über einen Nocken (11) verfügt, der auf ein Schiebeelement (12) wirkt und dieses nach unten drückt, so daß der bewegliche Teil (92) des Ringstücks (9) nach hinten geschoben werden kann. Eine Rückstellfeder (13) drückt das Schiebeelement (12) wieder in die Position, in der das bewegliche Teil (92) des Ringstücks (9) mit dem festen Teil (91) verriegelt ist, wenn der Nocken (11) des Schlosses 10 durch Drehen des Schlüssels das Schiebeelement (12) freigibt.

7. Vorrichtung nach Anspruch 3, dadurch gekennzeichnet, daß das Schloß (10) mit einer Alarmanlage verbunden ist.

## Claims

1. Anti-theft device for a motor vehicle comprising means for locking the hand brake lever (3) when the latter is in the on position, these means clamping onto the gear change stick (8) preventing movement, characterised in that the locking means consist of a casing (1) which conceals and surrounds the hand brake lever (3), the casing being mounted to pivot about a clamping fitting (4) connected to the hand brake lever (3).

2. Device in accordance with claim 1 characterised in that the pivoting axis (5) of the casing (1) passing through the clamping fitting (4) is above the hand brake lever (3).

3. Device in accordance with claim 1 characterised in that the casing (1) clamps onto the gear change stick (8) via an annular section (9) in two parts (91, 92) controlled by a lock (10).

4. Device in accordance with claim 3 characterised in that the annular section (9) consists of a fixed part (91) and a movable part (92) which can be moved longitudinally in order to disengage the gear change stick (8) when the lock (10) is in the open position.

5. Device in accordance with claim 4 characterised in that the fixed part (91) and the movable part (92) of the annular section (9) have, at their contact surfaces, a tenon (15)/mortice (14) assembly to prevent the annular section (9) being opened by being forced out of line.

6. Device in accordance with claim 4 characterised in that the lock (10) includes a stub (11) which rests on and displaces a mobile return element (12) which enables the movable part (92) of the annular section (9) to be disengaged, a return spring (13) returning the return element (12) into a position where it blocks the mobile part (92) of the annular section (9) against the fixed part (91) when the lock (10) is operated in such a way as to release the stub (11) resting on the return element (12).

7. Device in accordance with claim 3 characterised in that an alarm can be connected to the lock (10).

EP 0 223 892 B1

FIG.3

FIG.1

FIG.4

FIG.2

# FIG. 5

# FIG. 6

# FIG. 7